**Europäisches Patentamt**

**European Patent Office**

**Office européen des brevets**

(19)

(11) Publication number: **0 177 821**
**B1**

(12) # EUROPEAN PATENT SPECIFICATION

(45) Date of publication of patent specification: **07.02.90**

(51) Int. Cl.⁵: **G 02 C 5/22**

(21) Application number: **85112002.2**

(22) Date of filing: **22.09.85**

(54) **Hinge device particularly for eyeglasses.**

(30) Priority: **25.09.84 IT 3085384 u**

(43) Date of publication of application:
**16.04.86 Bulletin 86/16**

(45) Publication of the grant of the patent:
**07.02.90 Bulletin 90/06**

(84) Designated Contracting States:
**AT CH DE FR LI**

(56) References cited:
**FR-A-2 043 881**
**FR-A-2 097 211**
**FR-A-2 114 282**
**US-A-3 644 023**
**US-A-4 269 488**

(73) Proprietor: **VISOTTICA S.p.A.**
**Via Vecchia Trevigiana, 11**
**I-31058 Susegana (Province of Treviso) (IT)**

(72) Inventor: **Montalban, Rinaldo**
**Via XX Settembre, 75**
**I-31015 Conegliano (Treviso) (IT)**

(74) Representative: **Modiano, Guido et al**
**MODIANO, JOSIF, PISANTY & STAUB Modiano**
**& Associati Via Meravigli, 16**
**I-20123 Milano (IT)**

Courier Press, Leamington Spa, England.

## Description

This invention relates to a hinge device for eyeglasses, associable with the front of eyeglasses.

Currently known are various types of elastic hinges for eyeglasses; some usually comprise a spring acting on a small plunger, others combine a ball with the spring which cooperates with a metal cam; the common object is to afford extra opening of the legs, with respect to the front of eyeglasses, extra opening being defined herein as opening in excess of an opening angle of approximately 90° defined between the front and the legs, as usually employed.

Also known from US—A—4 269 488, is a flexible hinge for resiliently connecting the arms and the front portion of a pair of spectacles which consists of a shaped wing connected by means of suitable connecting members, to the arms, the shaped wing being provided with a housing in which a pressure cylindrical spring is housed. A lever arm is pin pivoted to the end of the wing, the lever arm · being provided with a lug capable of engaging with the cylindrical spring, the lever arm being pivoted to the front portion of the spectacles pair, by means of a second pin. In this manner, the arms connected to the front portion of the spectacles pair are capable of being spread apart, by exercising a slight outwardly directed pressure.

Such known hinges of the first mentioned type however, have various drawbacks, such as wear of the contacting parts, which is only partially reduced by using very hard materials and their constructional complexity.

It is the primary aim of this invention to obviate such prior drawbacks of known types of hinge devices for eyeglasses by providing a hinge device particularly for eyeglasses which not only allows extra opening of the legs past their usual position of use, but which also achieves a snap-action effect for arresting the legs in a parallel position to the front portion.

These and other objects are achieved by a hinge device for eyeglasses comprising a box-like body associable with the front of eyeglasses and having two shoulders protruding therefrom, and including a seat for an elastic compression means, to said body there being hinged at a first pivot axis an essentially L-shaped element, a second flange of the L-shaped element being associated at a second pivot axis with means comprising a lug for connecting it to the leg of the eyeglasses, a first flange thereof being located between the two shoulders adjacent an end of the elastic means opposite to the seat, said elastic means being located off-centered and with its direction of compressibility perpendicular with respect to the first pivot axis, characterized in that the lug pivoted to the end of the second flange of the L-shaped element has a bevelled corner edge and a sharp corner edge cooperating with an adjacent surface of a step of the box-like body during the closure phase to provide snap closure of the leg.

Further features and advantages will become apparent from the description of a preferred embodiment of the hinge device for eyeglasses as shown by way of illustration in the accompanying drawings, where

Figure 1 is a first three-quarter perspective view;

Figure 2 is a partly sectional view taken on the section plane II—II of Figure 1 showing the hinge device in a position of normal use;

Figure 3 is a partly sectional view similar to the view of Figure 2, but showing the hinge device in an extra opened condition;

Figure 4 is a partially sectional view similar to the view of Figure 3 showing the position of unstable equilibrium preceding snap return of the leg from an extra opened position to a position of normal use;

Figure 5 is a partly sectional view showing a variation of the hinge device particularly for metal eyeglasses frames;

Figure 6 is a sectional view taken on the plane VI—VI of Figure 5;

Figure 7 is a partly sectional view of the device of Figure 5; and

Figure 8 is a perspective view of a moulding of the variation of the hinge device illustrated in Figure 5.

With reference to the previously cited figures, the hinge device for eyeglasses 1 comprises a metal structure composed of a T-shaped moulding 2 associable with a front 3 and rigid with the rear wall 4 of a box-like body 5 through a shank 6 extending perpendicularly with respect to the wall itself.

The box-like body 5 is advantageously of metal construction, has a parallelepipedal shape and, at a rear region 7 thereof, there is formed a recessed step 8 having a height substantially corresponding to one half of a height dimension defined by the body itself.

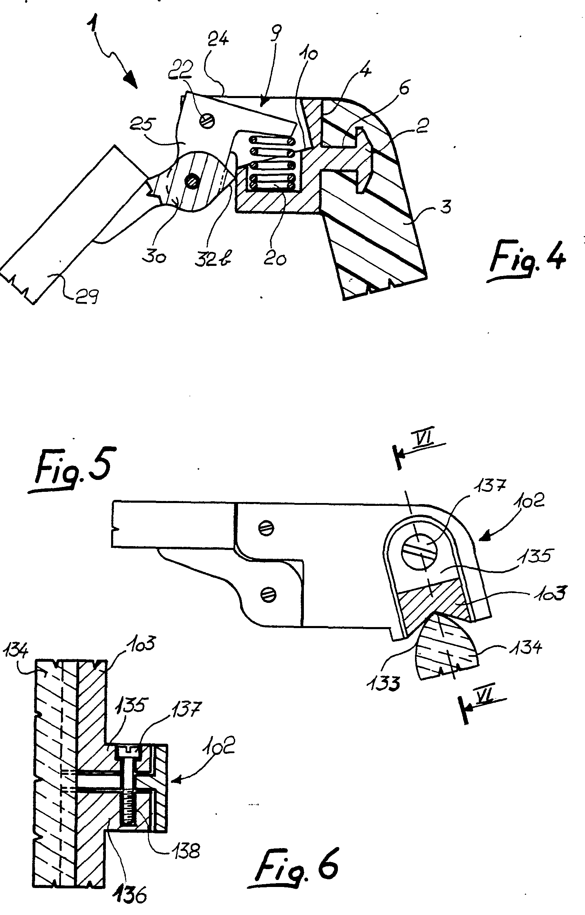

At the top of the body 5 there is formed, along the longitudinal mid-axis of the same, a milling 9 performed on an inclined plane 10 (Figure 4), that milling partially spanning, both in length and . width, the top wall 11 of the body 5 and approximately one half the height of the step 8.

Thus, there are defined two side shoulders 12 and 13 of substantially parallelepipedal shape and advantageously having a lateral extension corresponding to about one fifth of a lateral extension defined by the wall 11, which is expediently radiused to the step 9 by two bevels 14 and 15 defining an S-shaped connection region.

Close to the top corner edge 16 of each of the two shoulders 12, 13 there is formed, on a common axis, a through hole 17 with which a screw 18 is associated.

A cylindrical seat 19, perpendicular with respect to the wall 11, is finally formed on the plane 10 of the body 5, there being housed therein an elastic biasing means such as a cylindrical coil compression spring 20.

The element 21 of essentially L-like shape is placed to cover the box-like body 5 and hinged to the shoulders 12 and 13 by means of screw thread engagement of the screw 18, there being formed a through hole 22 therein in correspondence with the through hole 17.

The flange 23 of the element 21, which is so sized as to fit in between the shoulders 12 and 13, rests internally on the spring 20 whilst its outer face 24 is adapted to lie at rest on level with the wall 11.

The other flange 25 rests internally at rest and at its end on the step 8, formed on it is also a through hole 26, off-centered relatively to the hole 17, with which there engages in thread engagement relationship a fastening screw 27 for hingedly connecting to the L-like element 21 a connection means 28, shaped to match the front region of the hinge and associated with the leg 29.

The connection means 28 has two lugs 30, parallel to each other and associated with the flange 25, protruding from the front itself, there being formed axially aligned holes 31 therein for screw thread engagement with the screw 27.

The shape of the lugs 30 is essentially parallelepipedal, having a bevelled corner edge 32a and a sharp one 32b.

The hinge device 1 is assembled as follows:

After inserting the spring 22 into the seat 21 the element 23 is positioned with the flange 25 between the shoulders 14 and 15 of the body 5 hingedly connecting it to the same by means of the screw 20 inserted in the through holes 17 of the shoulders 12, 13 and the through hole 22 of the L-like element 21. Obviously, the threadable zone of the screw or any portion thereof may be threaded depending on which of the holes 17, 22 are threaded to engage therewith. The element 23 is to be hinged in turn, by means of the screw 27, inserted into the through holes 31 of the lugs 30 and the through hole 26 formed in the flange 25 of the L-like element 21, to the matingly shaped connection means 30 present on the front 3 of the eyeglasses, whilst the leg 29 is associated with the rear wall 4 of the box-like body 5 through the T-shaped moulding 2 adapted to be embedded in the same. Obviously this moulding may define any suitable configuration for embedding purposes and any suitable threading arrangement may be provided between the screw 27 and one or more of the through holes 26, 31.

Operation is as follows:

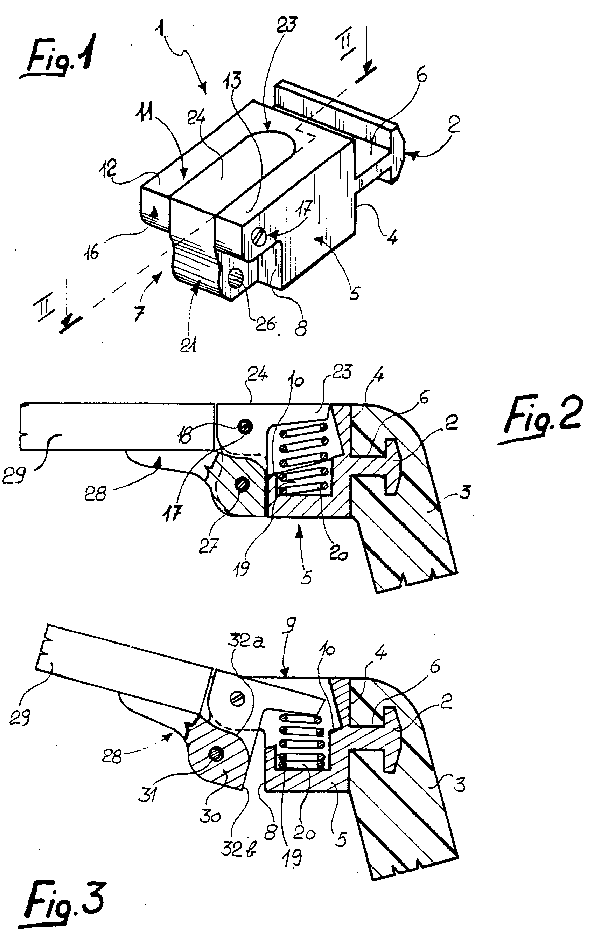

Figure 2 shows the normal in-use position, that is with the leg 29 disposed at about 90° with respect to the front 3, the step 8 preventing the spring 20 from being stressed.

Figure 3 shows the condition of extra opening, where it may be seen that as the angle between the leg and front increases, the flange 23 of the element 21 associated with the connection means 28 compresses the spring 20 owing to the interaction of the leg and corner edge 16. Thus, the rotation is allowed, about the axis of the screw 18, of the leg past the positin of normal use (i.e. to a position of extra opening), the spring tending subsequently to return the leg to the condition shown in Figure 2.

In Figure 4 there is shown instead a phase immediately preceding the snap closure of the leg 29 which brings the latter to arrange itself substantially parallel to the front 3, to a position of non-use of the eyeglasses.

Where in fact the angle of about 90° is reduced which is defined between the leg 29 and front 3, the sharp corner edge 32b of the lugs 30 interacts with the step 8 causing the element 21 to turn about the axis of the screw 18 and the simultaneous compression of the spring 20.

Thus one passes from a position of stable equilibrium (90° angle) to one of unstable equilibrium (angle of less than 90°).

On further decreasing the angle (i.e. rotating the leg 29 further) the edge 32b of the lug 30 will move past the end of the step 8, thereby enabling the leg to be arranged substantially parallel to the front 3.

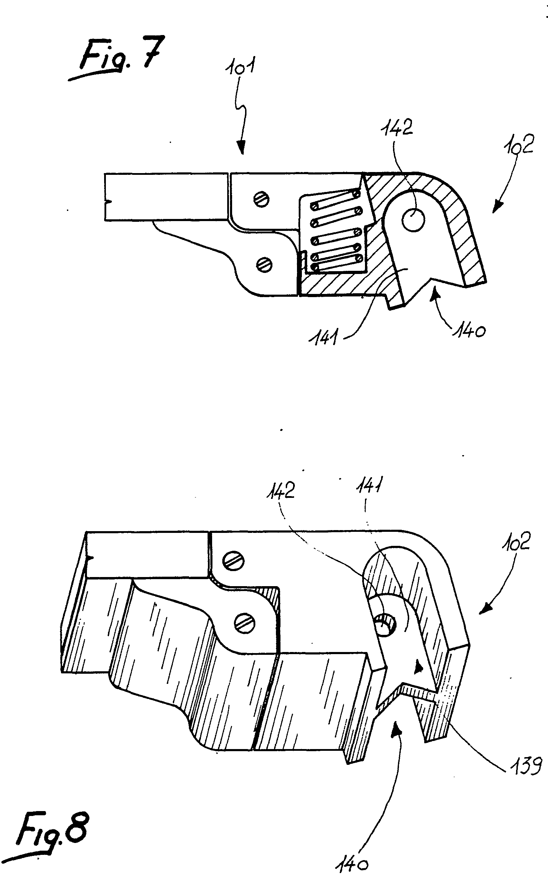

In Figures 5, 6, 7 and 8 there is shown a variation of the moulding 102 associated with a front or frame 103, the hinge 101 remaining unaltered in all its other parts. That variation finds application particularly with metal eyeglasses frames.

In that case, in fact, with the front 103, having an open structure with a V-shaped seat 133 for the insertion of the lens 134, there are made rigid two half-tubes 135 and 136, associated with each other through a screw 137 inserted into a matingly shaped seat 138 formed therein.

The moulding 102 is correspondingly shaped to mate with the two half-tubes 135 and 136, its outer structure completely enclosing them together with that portion of the front which is fastened to them; it has, therefore, two seats 139 and 140 divided, however, by a flat sector 141 on which there are formed a V-like recess having the same dimensions as the seat 133 and a hole 142 at the seat 138.

That sector 141 is interposed to the two half-tubes 135 and 136 and associated therewith through the screw 137 passed through the half-tube 135, the hole 142 in the sector 141 and expediently threaddedly engaging with the seat 138. Either of both of the half-tubes and/or the hole 142 may be threaded for screw thread engagement with the screw 137.

All of the other component elements of the hinge device 101 being unchanged, its operation is the same.

The advantages of that hinge are associated, therefore, with the simplicity of effectuation of the extra opening, without this resulting in mechanical deformations of the front and legs, and with the automatic restoration of the same to the normal position.

The snap closure also allows the leg to be positioned relatively to the front in a condition of stable equilibrium.

The wall 4 of the body 5 finally permits the seat for the spring to be kept isolated in the condition of stable equilibrium, preventing the infiltration of dirt and plastics where the leg is embedded in the base 2.

The moulding 102 further enables the hinge device to be used with metal frames, increasing its application to all known types of eyeglasses frame structures.

Of course, the materials used and the dimensions may be any ones, depending on requirements. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A hinge device for eyeglasses comprising a box-like body (5) associable with the front (3, 103) of eyeglasses and having two shoulders (12, 13) protruding therefrom, and including a seat (19) for an elastic compression means (20), to said body (5) there being hinged at a first pivot axis (17) an essentially L-shaped element (21), a second flange (25) of the L-shaped element being associated at a second pivot axis (27) with means (28) comprising a lug (30) for connecting it to the leg (29) of eyeglasses, a first flange (23) thereof being located between the two shoulders (12, 13) adjacent an end of the elastic means (20) opposite to the seat (19), said elastic means (20) being located off-centered and with its direction of compressibility perpendicular with respect to the first pivot axis, characterized in that the lug (30) pivoted to the end of the second flange (25) of the L-shaped element (21) has a bevelled corner edge (32a) and a sharp corner edge (32b), cooperating with an adjacent surface of a step (8) of the box-like body (5) during the closure phase to provide snap closure of the leg (29).

2. A hinge device according to claim 1, characterized in that it has a T-shaped moulding (2) associable with the front (3) of eyeglasses and the shank (6) whereof is associated perpendicularly with a wall (4) of said box-like body (5), said step (8) having a height corresponding to approximately one half of the height of the box-like body (5), and being located at the bottom and on the opposed side of said body with respect to the moulding (2), at the top of said body (5) there being formed, along the longitudinal mid-axis thereof, a milling (9) performed on an inclined plane (10) and spanning partially the thickness of the body (5) to about one half of the height dimension of the step (8), said milling (9) defining two parallelepipedal shoulders (12, 13) protruding longitudinally, extending from the upper portion of the body (5) and being radiused at the bottom to the step (8) through each of said shoulders (12, 13) there being formed a through hole (17) to form the mutual first pivot axis.

3. A hinge device according to Claim 1 or 2, characterized in that it has, between the shoulders (12, 13), a cylindrical seat (19) for the elastic means (20) having the longitudinal axis perpendicular to the shank (6) of the moulding, said seat (19) being formed on the base of the inclined plane (10) formed by said milling (9).

4. A hinge device according to claims 1, 2 and 3, characterized in that the L-shaped element (21) is placed on the box-like body (5) with the inner surface of the end of the first and second flange (23, 25) resting, respectively, on the elastic means (20) and the step (8), said L-shaped element (21) having, moreover, two through holes (22, 26) each having a longitudinal axis extending perpendicular to the axis of the cylindrical seat (19), the one hole (22, 26) being formed in alignment with the hole (17) formed through the shoulders (12, 13), and the other being formed close to the end of the second flange (25).

5. A hinge device according to claim 2, characterized in that the inclination of the milling (9) performed on the body (5) is such as to define an angle greater than 180° with respect to the longitudinal axis of the moulding (2) shank (6), said milling (9) not spanning the full thickness of the wall (4) with which the moulding (2) shank (6) is rigid.

6. A hinge device according to one or more of the previous claims, characterized in that it has, in a variation, a matingly shaped moulding (102) associable with half-tubes (135, 136) of the frame (103) said moulding (102) having for the same a seat (133) on which there is located, about midway of its longitudinal extension, a flat cross sector (141) defining two separate seats (139, 140) one for each half-tube (135, 136).

7. A hinge device according to claim 6, characterized in that said flat sector (141) is interposed to the facing surfaces of the two half-tubes (135, 136), there being formed a hole (142) therein extending coaxial to the half-tubes (135, 136), for fastening the same by means of a screw (137), on said sector (141) there being also formed a matingly shaped seat (140) for the area of the peripheral edge of the lens.

8. A hinge device according to claim 1 and 3, characterized in that the elastic means comprises a cylindrical coil compression spring (20).

## Patentansprüche

1. Eine Scharniervorrichtung für Brillen mit einem kastenartigen Körper (5), der mit der Vorderseite (3, 103) von Brillen zu vereinigen ist und zwei Schultern (12, 13) aufweist, die davon vorstehen, und enthaltend einen Sitz (19) für ein elastisch zusammendrückbares Mittel (20), wobei an dem Körper (5) an einer ersten Schwenkachse (17) ein im wesentlichen L-förmiges Element (21) angelenkt ist, wobei ein zweiter Flansch (25) des L-förmigen Elementes an einer zweiten Schwenkachse (27) mit Mitteln (28) verbunden ist, die einen Ansatz (30) aufweisen, um es mit dem Brillenbügel (29) zu verbinden, wobei ein erster Flansch (23) davon zwischen den beiden Schultern (12, 13) angren-

zend an ein Ende der elastischen Mittel (20), dem Sitz (19) entgegengesetzt angeordnet ist, wobei das elastische Mittel exzentrisch und mit seiner Zusammendrückungsrichtung senkrecht zu der ersten Schwenkachse angeordnet ist, dadurch gekennzeichnet, daß der schwenkbar an dem Ende des zweiten Flansches (25) des L-förmigen Elementes (21) angeordnete Ansatz (30) eine abgeschrägte Eckkante (32a) und eine scharfe Eckkante (32b) zum Zusammenwirken mit einer angrenzenden Fläche einer Stufe (8) des kastenartigen Körpers (5) während die Schließphase hat, um eine Schnapp-Schließwirkung des Bügels (29) zu bewirken.

2. Eine Scharniervorrichtung nach Anspruch 1, dadurch gekennzeichnet, daß es eine T-förmige Ausbildung (2) aufweist, die mit der Vorderseite (3) von Brillen zu verbinden ist und deren Schaft (6) senkrecht mit einer Wand (4) des kastenartigen Körpers (5) verbunden ist, wobei die Stufe (8), eine Höhe entsprechend etwa der Hälfte der Höhe des kastenartigen Körpers (5) hat und an dem Boden und der zu der Ausbildung (2) entgegengesetzten Seite des Körpers angeordnet ist, wobei an der Oberseite des Körpers (5) entlang deren Längsmittelachse eine Ausnehmung bzw. Ausfräsung (9) ausgebildet ist, die an einer schrägen Ebene (10) vorgenommen ist und sich teilweise über die Dicke bzw. Breite des Körpers (5) auf etwa die Hälfte der Höhenabmessungen der Stufe (8) erstreckt, wobei die Ausnehmung bzw. Ausfräsung (9) zwei parallelepipedförmige Schultern (12, 13) abgrenzt, die längs vorstehen, sich von dem oberen Teil des Körpers (5) erstrecken und am Boden der Stufe (8) mit einem Radius versehen sind, wobei durch jede der Schultern (12, 13) ein Durchgangsloch (17) verläuft, um die beiderseitige erste Schwenkachse zu bilden.

3. Eine Scharniervorrichtung nach Anspruch 1 oder 2, dadurch gekennzeichnet, daß sie zwischen den Schultern (12, 13) einen zylindrischen Sitz (19) für das elastische Mittel (20) aufweist mit einer zu dem Schenkel (6) der Ausbildung senkrecht der Längsachse, wobei der Sitz (19) auf der Basis der durch die Ausnehmung bzw. Ausfräsung (9) gebildeten schrägen Ebene (10) ausgebildet ist.

4. Eine Scharniervorrichtung nach Anspruch 1, 2 und 3, dadurch gekennzeichnet, daß das L-förmige Element (21) auf dem kastenartigen Körper (5) mit der inneren Fläche des Endes des ersten und zweiten Flansches (23, 25) plaziert ist und auf dem elastischen Mittel und der Stufe (8) ruht, wobei das L-förmige Element (21) darüberhinaus zwei Durchgangslöcher (22, 26) aufweist, von denen jedes eine Längsachse hat, die sich senkrecht zu der Achse des zylindrischen Sitzes (19) erstreckt, wobei ein Loch (22, 26) mit dem durch die Schultern (12, 13) ausgebildeten Loch (17) ausgerichtet geformt ist und daß andere nahe dem Ende des zweiten Flansches (25) ausgebildet ist.

5. Scharniervorrichtung nach Anspruch 2, dadurch gekennzeichnet, daß die Neigung der Ausnehmung bzw. Ausfräsung (9) die in dem Körper (5) vorgesehen ist, derart ist, daß sie einen Winkel größer als 180° im Vergleich zur Längsachse des Schaftes (6) der Ausbildung abgrenzt, wobei die Ausnehmung bzw. Ausfräsung (9) nicht die ganze Dicke bzw. Breite der Wandung (4) überspannt, mit der der Schaft (6) der Ausbildung (2) starr verbunden ist.

6. Eine Scharniervorrichtung nach einem oder mehreren der vorangehenden Ansprüche, dadurch gekennzeichnet, daß es in einer Abwandlung eine passend geformte Ausbildung (102), die mit Halbrohren (132, 136) des Rahmens (103) zu vereinigen ist, wobei die Ausbildung (102) dafür einen Sitz (133) aufweist, auf dem etwa halbwegs seiner Längserstreckung ein flacher Quersektor (141) angeordnet ist, der zwei separate Sitze (130, 140) für jedes Halbrohr (135, 136) bildet.

7. Scharniervorrichtung nach Anspruch 6, dadurch gekennzeichnet, daß der flache Sektor (141) den Stirnflächen der zwei Halbrohre (135, 136) zwischengeschaltet ist, wobei dort ein Loch (142) darin ausgebildet ist, das sich koaxial zu den Halbrohren (135, 136) erstreckt, um diese mittels einer Schraube (137) an dem Sektor (141) zu befestigen, wo auch ein passend geformter Sitz (140) für den Bereich der Umfangskante der Linse ausgebildet ist.

8. Eine Scharniervorrichtung nach Anspruch 1 und 3, dadurch gekennzeichnet, daß die elastischen Mittel eine zyhlindrische Schraubendruckfeder (20) enthalten.

**Revendications**

1. Dispositif d'articulation pour monture de lunettes, comprenant un corps du genre caisson (5) associable à la partie avant (3, 103) d'une monture de lunettes et possédant deux épaulements (12, 13) dépassant du corps, et comprenant un siège (19) pour un moyen de compression élastique (20), un élément sensiblement en forme de L (21) étant articulé sur le corps (5) sur un premier axe de pivotement (17), une deuxième branche (25) de l'élément en forme de L étant associée, sur un deuxième axe de pivotement (27), à un moyen (28) comprenant un oeillet (30) pour le relier à la branche (29) de la monture de lunettes, une première branche (23) de l'élément étant située entre les deux épaulements (12, 13) au voisinage d'une extrémité du moyen élastique (20) opposée au siège (19), le moyen élastique (20) étant positionné décentré et avec sa direction de compressibilité perpendiculaire par rapport au premier axe de pivotement, caractérisé en ce que l'oeillet (30), pivoté sur l'extrémité de la deuxième branche (25) de l'élément en forme de L (21), possède un bord de coin en biseau (32a) et un bord de coin en pointe (32b), coopérant avec un surface voisine d'un gradin (8) du corps du genre caisson (5) pendant la phase de fermeture, afin de fournir une fermeture par enclenchement de la branche (29).

2. Dispositif d'articulation selon la revendication 1, caractérisé en ce qu'il possède un moulage en forme de T (2) associable à la partie avant (3) de la monture de lunettes, et dont la tige (6) est associée perpendiculairement à une paroi (4) du corps du genre caisson (5), le gradin (8) possédant un hauteur correspondant à environ une moitiè de la hauteur du corps du genre caisson (5), et étant situé sur le fond et sur le côté opposé du corps par rapport au moulage (2), et un fraisage (9) étant formé sur le dessus du corps (5), le long de son axe median longitudinal, fraisage qui est effectué sur un plan incliné (10) et qui enlève une partie de l'épaisseur du corps (5), sur environ une moitié de la hauteur du gradin (8), le fraisage (9) définissant deux épaulements parallélépipèdiques (12, 13) dépassant longitudinalement, qui s'étendent depuis la partie supérieure du corps (5) et qui sont arrondis sur le fond vers le gradin (8), un orifice traversant (17) étant formé à travers chacun des épaulements (12, 13), afin de former le premier axe de pivotement mutuel.

3. Dispositif d'articulation selon la revendication 1 ou 2, caractérisé en ce qu'il possède, entre les épaulements (12, 13), un siège cylindrique (19) pour le moyen élastique (20) dont l'axe longitudinal est perpendiculaire à la tige (6) du moulage, le siège (19) étant formé sur la base du plan incliné (10) formé par le fraisage (9).

4. Dispositif d'articulation selon les revendications 1, 2 et 3, caractérisé en ce que l'élément en forme de L (21) est placé sur le corps du genre caisson (5) avec la surface intérieure de l'extrémité de la première et de la deuxième branche (23, 25) reposant respectivement sur le moyen élastique (20) et sur le gradin (8), l'élément en forme de L (21) possédant en outre deux orifices traversants (22, 26) ayant chacun un axe longitidinal s'étendant perpendiculairement à l'axe du siège cylindrique (19), l'un des orifices (22, 26) étant formé en alignement avec l'orifice (17) formé à travers les épaulements (12, 13), et l'autre étant formé à proximité de l'extrémité de la deuxième branche (25).

5. Dispositif d'articulation selon la revendication 2, caractérisé en ce que l'inclinaison du fraisage (9) effectué sur le corps (5) est prévue de manière à définir un angle supérieur à 180° par rapport à l'axe longitudinal de la tige (6) du moulage (2), le fraisage (9) n'enlevant pas la totalité de l'épaisseur de la paroi (4), dont la tige (6) du moulage (2) est solidaire.

6. Dispositif d'articulation selon une ou plusieurs des revendications précédentes, caractérisé en ce qu'il possède, selon une variante, un moulage (102) de forme appariée, associable à des demi-tubes (135, 136) de la monture (103), le moulage (102) possédant à cet effet un siège (103) sur lequel se trouve, environ à mi-chemin du développement longitudinal, un secteur transversal plat (141) définissant deux sièges séparés (139, 140), un pour chaque demi-tube (135, 136).

7. Dispositif d'articulation selon la revendication 6, caractérisé en ce que le secteur plat (141) est interposé sur les surfaces en vis-à-vis des deux demi-tubes (135, 136), un orifice (142) étant formé à l'intérieur, qui s'étend coaxialement aux demi-tubes (135, 136), pour les fixer à l'aide d'une vis (137), un siège de forme appariée (140) pour la région du bord périphérique des verres de lunettes étant également formé sur le secteur (141).

8. Dispositif d'articulation selon les revendications 1 et 3, caractérisé en ce que le moyen élastique comprend un ressort de compression hélicoïdal cylindrique (20).

_Fig.1_

_Fig.2_

_Fig.3_

*Fig. 4*

*Fig. 5*

*Fig. 6*

2

_Fig. 7_

101

142

102

141

140

_Fig.8_

142

141

102

139

140